Europäisches Patentamt

European Patent Office

Office européen des brevets

(19)

(11)  EP 1 376 550 A2

(12)     **EUROPEAN PATENT APPLICATION**

(43) Date of publication:
    **02.01.2004  Bulletin 2004/01**

(51) Int Cl.⁷: $G11B \ 7/00$

(21) Application number: **03253884.5**

(22) Date of filing: **19.06.2003**

(84) Designated Contracting States:
    **AT BE BG CH CY CZ DE DK EE ES FI FR GB GR
    HU IE IT LI LU MC NL PT RO SE SI SK TR**
    Designated Extension States:
    **AL LT LV MK**

(30) Priority:  **19.06.2002  JP 2002178529**

(71) Applicant: **Pioneer Corporation
    Meguro-ku, Tokyo (JP)**

(72) Inventors:
    • **Sasaki, Yoshio, C/o Pioneer Corporation
      Tokorozawa-shi, Saitama (JP)**

    • **Tanaka, Hisao, C/o Pioneer Corporation
      Tokorozawa-shi, Saitama (JP)**
    • **Fujinoki, Shinichi, C/o Pioneer Corporation
      Tokorozawa-shi, Saitama (JP)**

(74) Representative: **Haley, Stephen
    Gill Jennings & Every,
    Broadgate House,
    7 Eldon Street
    London EC2M 7LH (GB)**

(54)   **Tilt correction device**

(57)     A tilt detecting device (50) detects and corrects a disc tilt without a dedicated tilt sensor. There is a correlation between an amplitude level of a prepit detection signal and a disc tilt quantity on a disc (1) on which prepits are formed in advance. Namely, the amplitude level of the prepit signal becomes maximum when the disc tilt quantity is zero. Therefore, by controlling a tilt correction quantity such that the amplitude level of the prepit detection signal becomes maximum, the tilt correction can be executed without utilizing a dedicated tilt sensor and the like.

FIG. 4

EP 1 376 550 A2

**Description**

The present invention relates to a tilt correction in an information recording apparatus and an information reproducing apparatus of an optical recording medium such as an optical disc.

Tilt correction is executed when information is recorded on an optical disc and information is reproduced from the optical disc. Tilt correction is to correct an inclination of a light beam (hereafter referred to as "disc tilt") with respect to an information recording surface of an optical disc. In a condition that proper tilt correction is executed, a light beam is irradiated on an optical disc perpendicularly to the information recording surface thereof.

Such a detection of a disc tilt was put into practice by a dedicated tilt sensor in the past. The tilt sensor is configured to irradiate a dedicated light for the disc tilt detection from a light source to an information recording surface of an optical disc and to detect the disc tilt quantity by receiving the reflected light from the optical disc.

One of problems in utilizing such a dedicated tilt sensor is that a size of a pickup device having a tilt sensor is, as a logical consequence, large because the dedicated tilt sensor itself is physically large. Therefore, such a tilt sensor cannot be installed into a slim-type disc drive device utilized in a portable personal computer and the like.

The present invention has been achieved in order to solve the above problems. It is an object of this invention to provide a tilt correction device which can correct a disc tilt without a dedicated tilt sensor.

According to one aspect of the present invention, there is provided a tilt correction device for a disc on which prepits are formed, including: a prepit signal generating unit which irradiates a light beam to the disc and which generates a prepit signal indicating whether the prepit exists or not based on a return light from the disc; a correction quantity determining unit which determines an optimum tilt correction quantity based on the prepit signal; and a tilt correction unit which executes tilt correction based on the optimum tilt correction quantity.

In recording or reproduction of information on or from a disc on which prepits are formed in advance, there is a correlation between the prepit signal and the disc tilt quantity. In the above tilt correction device, the prepit signal indicating the presence of the prepit is generated, and the tilt correction quantity is determined based on the prepit signal. Therefore, the tilt correction can be executed without utilizing a dedicated tilt sensor and the like.

The correction quantity determining unit may determine the optimum tilt correction quantity based on an amplitude level of the prepit signal. In a preferred embodiment, the correction quantity determining unit may include: an amplitude level detecting unit which detects the amplitude level of the prepit signal for a plurality of tilt correction quantities; and a determining unit which determines the tilt correction quantity with which the amplitude level becomes maximum as the optimum tilt correction quantity.

Further, the amplitude level detecting unit may detect the amplitude levels at an identical position on the disc for the plurality of tilt quantities. Thus, the tilt correction quantity can be stably determined. Specifically, the amplitude level detecting unit may detect the amplitude level in a non-recorded area on the disc. Also, the amplitude level detecting unit may detect the amplitude level in a space portion of recording information, in reproducing a recorded area on the disc or in recording to the disc.

In an example, the amplitude level detecting unit may include a level-hold circuit which detects a peak-level and/or a bottom-level of the prepit.

The tilt correction device may further include a storage unit which stores the optimum tilt correction quantity for each of a plurality of areas on the disc, wherein the tilt correction unit executes the tilt correction based on the optimum tilt correction quantity stored in the storage unit.

According to another aspect of the present invention, there is provided a tilt correction method for a disc on which prepits are formed, including: a process which irradiates a light beam to the disc; a process which generates a prepit signal indicating whether the prepit exists or not based on a return light from the disc; a process which determines an optimum tilt correction quantity based on the prepit signal; and a process which executes a tilt correction based on the optimum tilt correction quantity.

By this method, the tilt correction can be accurately performed without the need of a dedicated tilt sensor.

The nature, utility, and further features of this invention will be more clearly apparent from the following detailed description with respect to preferred embodiment of the invention when read in conjunction with the accompanying drawings briefly described below.

In the Drawings;

FIG. 1 is a diagram to explain a land prepit formed on a disc and how to produce a LPP signal;

FIG. 2 shows graphs of a correlation of a disc tilt quantity with respect to a jitter, an amplitude level of an RF signal and an amplitude level of an LPP signal;

FIG. 3 is a block diagram showing a configuration of a tilt correction device according to a preferred embodiment;

FIG. 4 is a block diagram showing a schematic configuration of an information recording and reproducing apparatus employing an example of the embodiment of this invention;

FIGS. 5A to 5C show examples of LPP signal waveforms in disc areas where a recording has not been done yet, where a recording has been done already, and where a recording is being done, respectively;
FIG. 6 is a flow chart of a correction profile preparation processing; and
FIG. 7 is a flow chart showing a tilt correction process.

Now, a preferred embodiment of this invention will be explained by referring to the attached drawings. In a case of an optical disc such as DVD-R and DVD-RW on which prepits are formed, there is a correlation between an amplitude level of a prepit signal and a disc tilt quantity. In this embodiment, regarding this point, a disc tilt quantity detection and a tilt correction are executed by utilizing a prepit signal.

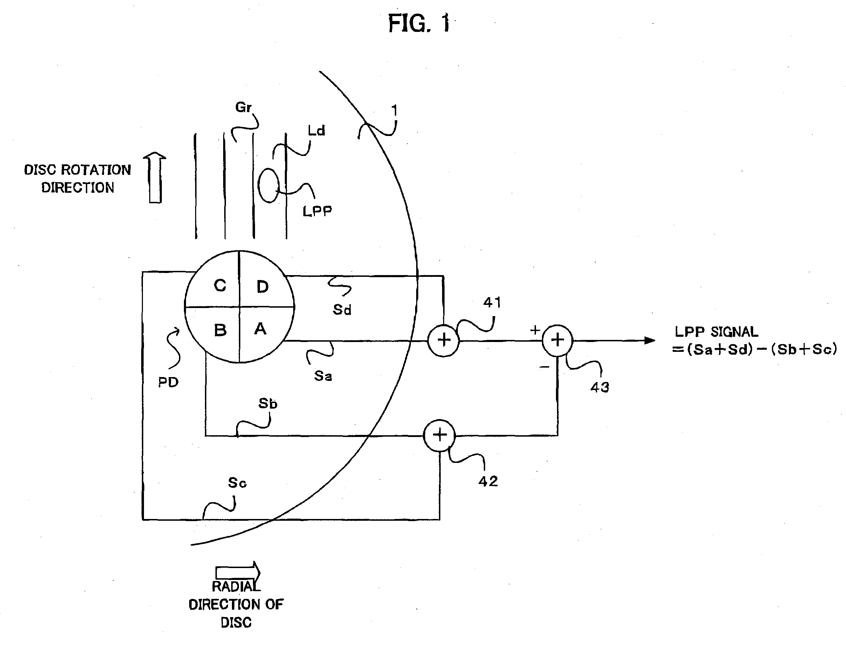

A relationship between a disc on which prepits are formed and a prepit signal is schematically shown in FIG. 1. A disc 1 is, for example, DVD-R or DVD-RW, and grooves Gr and lands Ld are spirally formed on a recording surface alternatively in a radial direction of the disc 1. The groove Gr serves as a recording track on which information is recorded, and the land Ld is formed between neighboring grooves Gr. On the land Ld, land prepits (hereafter referred to as "LPP") are formed in accordance with a designated rule. The land prepit LPP includes address information on the disc 1. Concretely, address information indicating an address of a certain groove Gr on the disc 1 is recorded as the LPP formed on the land Ld outside the certain groove Gr.

The LPP can be detected by a quadruple photodetector PD shown in FIG. 1. The quadruple photodetector has four detection elements A to D which output detection signals Sa to Sd obtained by photo-electronic conversion of a light receiving quantity from the disc 1. The detection signals Sa to Sd output from the detection element A to D are operated by three adders 41 to 43, and an LPP signal is generated. The LPP signal is given by the following equation.

$$\text{LPP signal} = (Sa+Sd) - (Sb+Sc) \qquad (1)$$

The quadruple photodetector is installed in a pickup of an information recording apparatus or an information reproducing apparatus. The LPP signal, which is a prepit signal indicating an existence of a LPP, is obtained by performing the operation according to the equation (1) using the detection signals Sa to Sd under the condition that the boundary between the detection elements A, D and the elements B, C of the quadruple photodetector PD traces the center of the recording track (groove) Gr by the tracking servo device provided in an information recording apparatus or an information reproducing apparatus.

The LPP exists on the lands inside and outside the recording track Gr. According to the equation (1) , an LPP which is located outside the recording track Gr is detected as a negative detection signal, and an LPP which is located inside the recording track Gr is detected as a positive detection signal.

As recognized from the equation (1), the LPP signal is obtained by a push-pull signal (i.e., a radial push-pull signal) in the radial direction of a quadruple photodetector PD. Logically, there is such a correlation that, as an angle between the irradiation direction of the light beam from the pickup and the recording surface of a disc is remote from the normal, that is to say, as a disc tilt quantity becomes larger, an amplitude level of the LPP signal becomes smaller. Also, as a disc tilt quantity becomes smaller, an amplitude level of a LPP signal becomes larger.

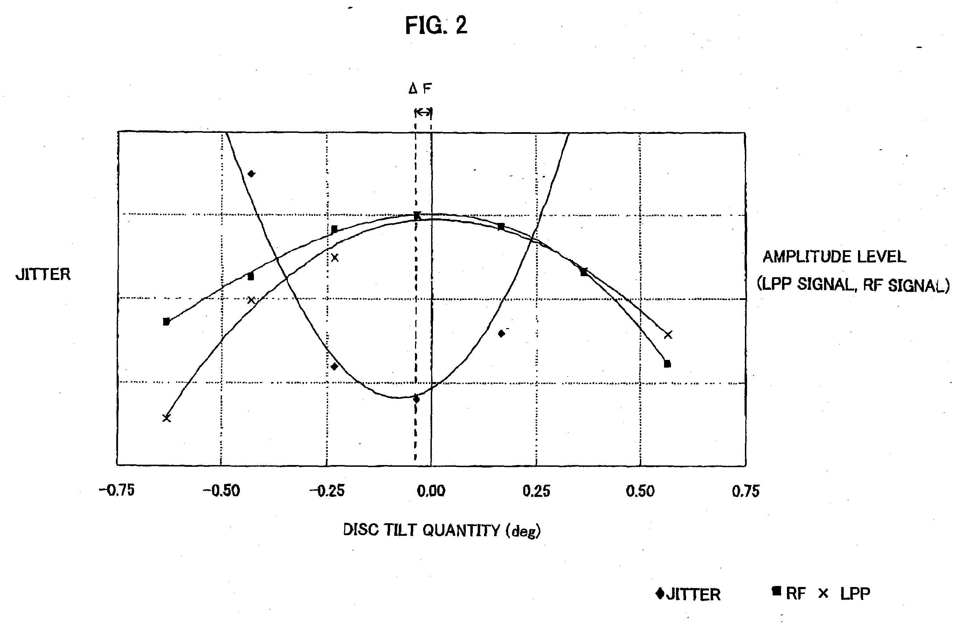

A measured result of a correlation between such a disc tilt quantity and an amplitude level of a LPP signal is shown in FIG. 2. As shown in FIG. 2, the larger the amplitude level is, the smaller the disc tilt quantity is, and a disc tilt quantity is almost zero at the position where the amplitude level of the LPP signal is maximum It is noted that an offset $\Delta F$ is included in a result of this experiment. As there is such a correlation between a disc tilt quantity and an amplitude level of an LPP signal, it is understood that an amplitude level of an LPP signal should be kept maximum in order to keep a disc tilt quantity zero. It is noted that the offset $\Delta F$ in FIG.2 is dependent upon an experiment system, and hence, in an actual correction, an offset quantity does not matter if the tilt correction quantity is adjusted to remove the offset quantity.

FIG. 2 also shows relationships of a disc tilt quantity with respect to an amplitude level of an RF signal obtained from a disc and a jitter quantity. As understood from FIG. 2, a correlation between an RF signal and a disc tilt quantity is almost the same as the correlation between an LPP signal and a disc tilt quantity. As for a j jitter quantity, it is understood that the smaller the disc tilt quantity becomes, the smaller the jitter quantity becomes.

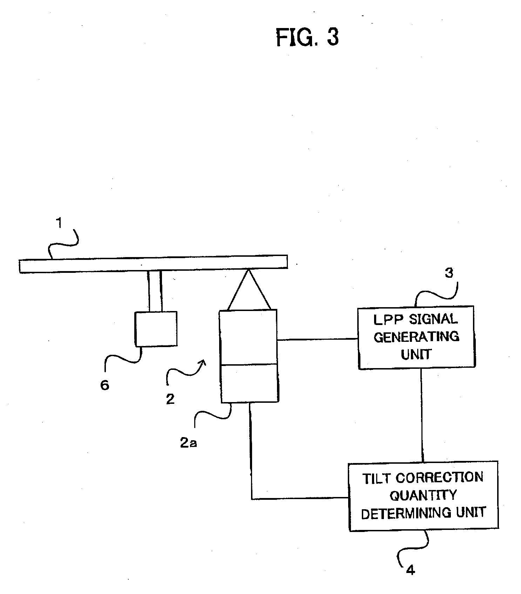

In this embodiment, based on the correlation between the disc tilt quantity and an amplitude level of the LPP signal, the disc tilt quantity is detected and the tilt correction is executed. Schematic configuration of a tilt correlation device is shown in FIG. 3.

In FIG. 3, the disc 1 is rotated at a predetermined linear velocity by a spindle motor 6. The pickup 2 irradiates a light beam for recording and/or reproducing to the disc 1, and receives a return light. The pickup 2 includes a quadruple photodetector PD shown in FIG. 1, and supplies the detection signals Sa to Sd output from the respective detection elements A to D to a LPP signal generating unit 3.

The LPP signal generating unit 3 including the adders 41 to 43 shown in FIG. 1 generates an LPP signal according to the equation (1), and supplies it to a tilt correction quantity determining unit 4. The tilt correction quantity determining unit 4 detects the amplitude level of then LPP signal by a level-hold circuit and the like. The tilt correction quantity determining unit 4 determines an optimum tilt correction quantity required to make the disc tilt quantity zero by utilizing the correlation between the disc tilt quantity and the amplitude level of the LPP signal. Then, the tilt correction quantity determining unit 4 supplies the optimum tilt correction quantity thus determined to a tilt correction unit 2a inside the pickup 2.

The tilt correction unit 2a executes tilt correction by adjusting the irradiation direction of the light beam according to the optimum tilt correction quantity thus input. Consequently, by utilizing the LPP signal, the detection of the disc tilt quantity and the tilt correction can be executed.

[Embodiment]

Now, a preferred example of the above embodiment will be explained.

(1) Information recording and reproducing apparatus

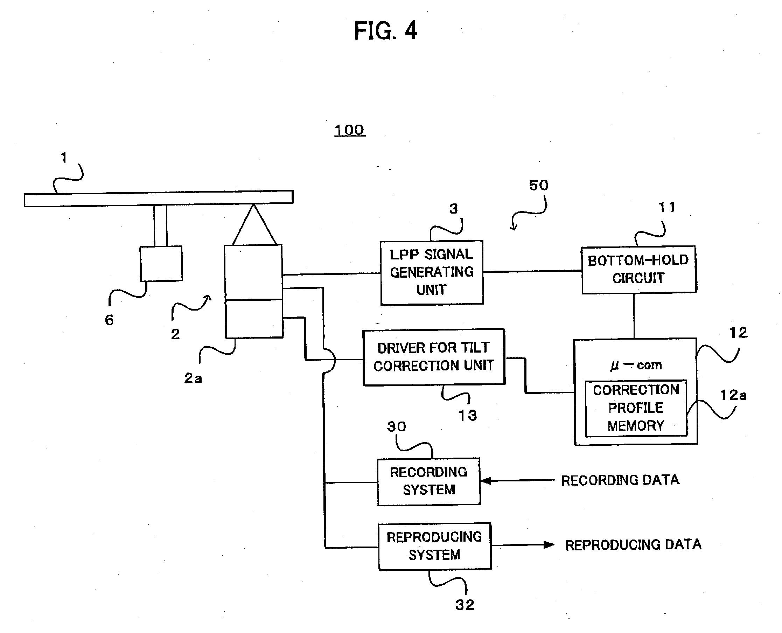

FIG. 4 is a block diagram showing a schematic configuration of an information recording and reproducing apparatus according to the invention. As shown in FIG. 4, the disc 1 is rotated at a constant linear velocity by the spindle motor 6. In FIG. 4, the information recording and reproducing apparatus 100 has a recording system 30 to record recording data to the disc 1, a reproducing system 32 to reproduce recorded data on the disc 1 and a tilt correction device 50 to execute tilt correction. The recording system 30 and the reproducing system 32 may be configured in a manner generally known in the art, so explanations of them are omitted here.

The tilt correction device 50 includes a pickup 2, an LPP signal generating unit 3, a bottom-hold circuit 11, a microcomputer 12, a driver 13 for the tilt correction unit and a tilt correction unit 2a formed in the pickup 2. The tilt correction unit 2a may be formed by various kinds of tilt correction devices, for example, a mechanism to mechanically adjust an optical axis of a light beam irradiated on a disc, a device utilizing a liquid crystal element, or an actuator. A memory 12a for storing a correction profile is provided in the microcomputer 12.

(2) Tilt correction device

Next, an operation of the tilt correction device 50 will be described. The pickup 2 has the quadruple photodetector PD shown in FIG. 1, and supplies the detection signals Sa to Sd output from the respective detection elements A to D to the LPP signal generating unit 3. The LPP signal generating unit 3 includes the adders 41 to 43 shown in FIG, 1, and generates an LPP signal according to the equation (1) and supplies it to the bottom-hold circuit 11.

The bottom-hold circuit 11 holds the bottom level of the LPP signal and supplies the level to the microcomputer 12. The microcomputer 12 executes the tilt correction by utilizing the level thus input.

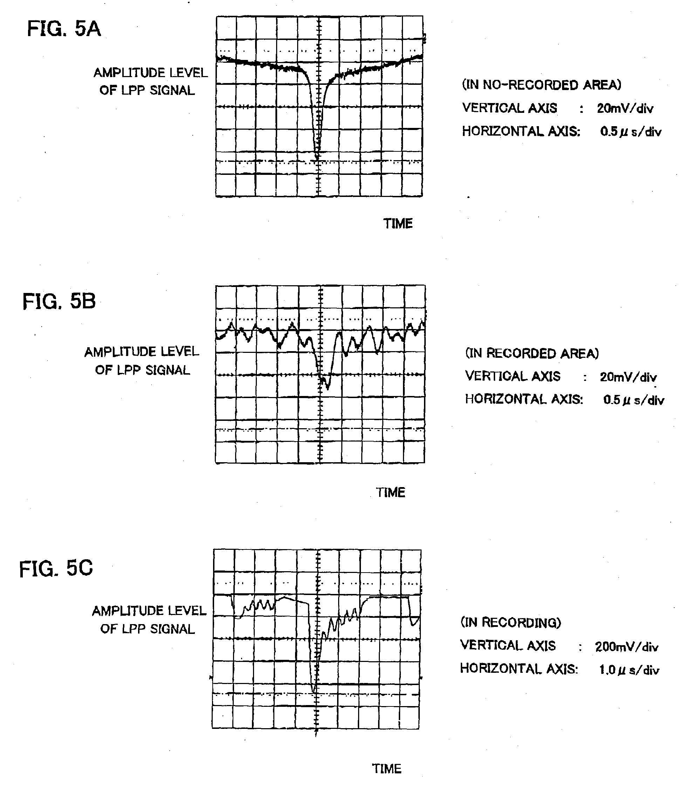

The bottom-hold circuit 11 holds the level of the LPP signal at the position where the LPP signal is stably detected. Concretely, the position is (a) a non-recorded area of a disc, or (b) a space portion in a recorded area of a disc, or (c) a space portion of recording data during data recording to the disc. FIGS. 5A to 5C show examples of the LPP signal waveform obtained from a disc. FIG. 5A shows an LPP signal waveform obtained during reproduction of a non-recorded area of a disc, FIG. 5B shows the LPP signal waveform obtained during reproduction of a recorded area of a disc, and FIG. 5C shows the LPP signal waveform obtained during recording information to a disc. The scale of the vertical axis in FIG. 5C, indicating the amplitude level of the LPP signal, is shown ten times larger than those in FIGS, 5A and 5B.

As shown in FIG. 5A, in a non-recorded area of a disc, a recording mark (pit) has not been formed yet on a recording track (groove) Gr, so the detection signal includes only a variation of an amplitude level corresponding to an LPP.

On the other hand, in a recorded area of a disc, a recording mark has been formed on a recording track Gr, so the LPP signal is affected by the recording mark. As a result, as shown in FIG. 5B, the amplitude level of the LPP signal becomes smaller and the waveform itself is deformed compared with the waveform shown in FIG. 5A. In short, the LPP signal waveform is unstable in a recorded area because RF signal component of recorded data is included in the LPP signal.

During recording information onto a disc, unlike the case of reproduction during which a reading light beam of constant power is irradiated, the light beam irradiated to a disc is modulated by a recording pulse train including a pulse train according to the write strategy for recording. For this reason, the amplitude level of the LPP signal generated based on a return light quantity from the disc is affected by the level variation of the recording pulse train and becomes unstable as shown in FIG. 5C. In FIG. 5C, since the light beam of larger power is irradiated by the top-pulse in the recording pulse train, the return light quantity also becomes larger, and the amplitude level of the LPP signal is about ten times as large as that one in the case of non-recorded area shown in FIG. 5A. (Therefore, the vertical axis in FIG. 5C is shown ten times larger than the scale in FIGS. 5A and 5B.) Namely, the LPP signal waveform is also unstable during recording.

Accordingly, in this embodiment, as mentioned above, the bottom-hold circuit 11 is formed to hold the amplitude level of the LPP signal and use it for the tilt correction (a) in the non-recorded area of a disc, (b) in a space portion in a recorded area of a disc, and (c) in a space portion during recording onto a disc. Thus, since the LPP signal can be obtained and the tilt correction can be executed based on the LPP signal only in the period in which the level of the LPP signal is stable, a proper tilt correction can be executed.

It is noted that the FIGS. 5A to 5C show the cases that the polarity of the LPP signal becomes negative within the LPP portion. In these cases, the tilt correction quantity, with which the absolute value of the amplitude level of the LPP signal becomes maximum, is determined as an optimum tilt correction quantity.

Moreover, as to the tilt correction during recording, when the recording is performed in synchronism with the LPP, it is preferred that the bottom-hold circuit 11 holds the LPP signal level in the 14T space. The reasons are that the LPP signal level is stable in the 14T space because the space period of 14T space is long, and that the LPP exists at the position of the 14T space with high probability in the case of the recording synchronized with the LPP.

(3) Tilt correction

The microcomputer 12 controls the tilt correction unit 2a through the driver 13 for a tilt correction unit to vary the tilt correction quantity, and thus obtains the tilt correction quantity with which the amplitude level (an absolute value) of the LPP signal obtained from the bottom-hold circuit 11 becomes maximum. Namely, by gradually varying the tilt correction quantity in the tilt correction unit 2a and obtaining the amplitude level of the LPP signal from the bottom-hold circuit 11, the microcomputer 12 obtains the correspondence between the tilt correction quantity by the tilt correction unit 2a and the amplitude level of the LPP signal at that time. As mentioned above by referring to FIG. 2, the amplitude level of the LPP signal becomes maximum when the disc tilt quantity is zero. Conversely, the tilt correction quantity at the time when the amplitude level of the LPP signal becomes maximum makes the disc tilt minimum. Therefore, the microcomputer 12 obtains the amplitude level of the LPP signal from the bottom-hold circuit 11 with varying the tilt correction quantity in the tilt correction unit 2a, and obtains the tilt correction quantity when the amplitude level of the LPP signal becomes maximum. Then, the microcomputer 12 stores the tilt correction quantity thus obtained in the correction profile memory 12a as the optimum tilt correction quantity.

The microcomputer 12 carries out the above processing in a plurality of areas on the disc, obtains the optimum tilt correction quantity in each area, and stores it in the correction profile memory 12a. The unit area for which one optimum tilt correction quantity is stored may be defined by dividing the entire recording area of the disc into a plurality of areas by a certain method. For example, the entire recording area of the disc may be divided into three or four sections from its inner periphery to its outer periphery in the radial direction of the disc (e.g., by the distance from the center of a disc), and the optimum tilt correction quantity can be determined and stored for each area.

When the optimum tilt correction quantity is determined by obtaining the amplitude level of the LPP signal with varying the tilt correction quantity, it is preferred that the amplitude level of the LPP signal corresponding to an identical LPP is utilized. As for DVD-R and DVD-RW, although the size of the prepit formed on the recording surface of the disc in advance is standardized, the size of the prepit actually formed on an actual disc can be often different even it is within the standards Accordingly, if the LPP signals obtained at the positions where the prepit size is different are used, the optimum tilt correction quantity cannot be obtained properly. Therefore, the microcomputer 12 repeatedly detects the LPP signal corresponding to the LPP in an identical area on the disc in the determination processing of the optimum tilt correction quantity, and determines the optimum tilt correction quantity with which a maximum amplitude level is obtained.

The above-mentioned identical area on the disc can be, for example, an identical recording track, an identical address, or an identical zone. Namely, by obtaining the amplitude level of the LPP signal corresponding to an identical LPP or a plurality of identical LPPs, the optimum tilt correction quantity is detected. In practice, the microcomputer 12 repeatedly reads an identical address by controlling the pickup 2 to repeatedly execute track jump at an identical recording track, or maintain a pause state at an identical address, or always obtain the amplitude level of the LPP signal corresponding to an identical LPP by repeatedly reading an identical zone of a predetermined length. The microcomputer 12 can obtain the amplitude level of the LPP signal for an identical tilt correction quantity for several times, and can utilize an average value of those amplitude levels in determining the optimum tilt correction quantity. Thereby, the microcomputer 12 can eliminate the influence of noise which may occur temporarily.

In accordance with the above-described processing the optimum tilt correction quantities to make the amplitude level of the LPP signal maximum, i.e. , to make the disc tilt quantity minimum (zero) are stored into the correction profile memory 12a in the microcomputer 12, for each of the plurality of areas defined in advance on the disc. Thereafter, the microcomputer 12 controls the tilt correction unit 2a according to the optimum tilt correction quantity stored in the correction profile memory 12a to execute the tilt correction during recording and/or reproduction of the disc.

(4) Correction profile preparation processing

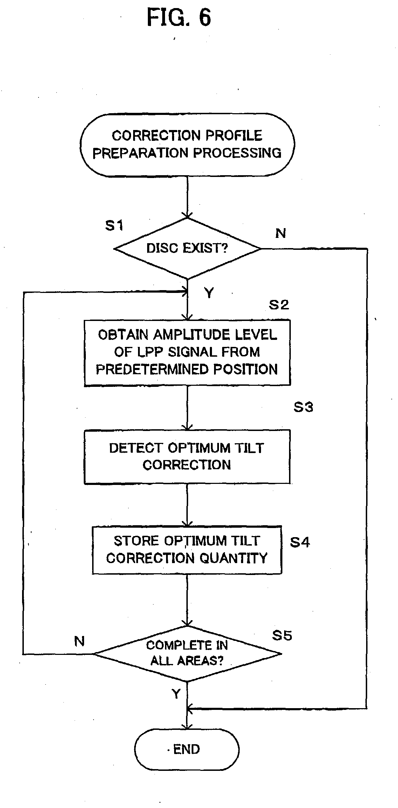

Next, a procedure of a correction profile preparation processing will be described by referring to FIG 6. FIG. 6 is a flow chart of a correction profile preparation processing. The correction profile preparation processing shown in FIG. 6 is carried out according to a control of a microcomputer 12, for example, when a disc is set to the information recording and reproducing apparatus 100.

First of all, the microcomputer 12 determines whether a disc is set to the information recording and reproducing apparatus 100 or not (step S1). This step is executed, for example, by the microcomputer 12 which obtains a signal from a detecting mechanism of the disc.

When a disc is set, the microcomputer 12 controls the pickup 2 and obtains the LPP signal from a predetermined position on the disc (step S2). The predetermined position is, as mentioned above, one of the plural areas in a case that the recording area of the disc is divided into several areas. Then, the microcomputer 12 repeatedly obtains the amplitude level of the LPP signal with varying the tilt correction quantity at that position, and determines the tilt correction quantity with which the amplitude level of the LPP signal becomes maximum, i. e., the optimum tilt correction quantity (step S3). Then, the microcomputer 12 stores the optimum tilt correction quantity thus obtained into the correction profile memory 12a in association with the position information (step S4).

Next, the microcomputer 12 determines whether the optimum tilt correction quantity is obtained in all predetermined areas on the disc or not (step S5). If the optimum tilt correction quantity is obtained in all areas, the processing is ended. On the other hand, if the optimum tilt correction quantity is not obtained in all areas, the processing returns to step S2 to repeat steps from S2 to S4, and the microcomputer 12 obtains the optimum tilt correction quantity in a next predetermined area and stores it In this way, when the optimum tilt correction quantity is obtained for all predetermined areas on the disc determined in advance, the processing is ended.

(5) Tilt correction processing

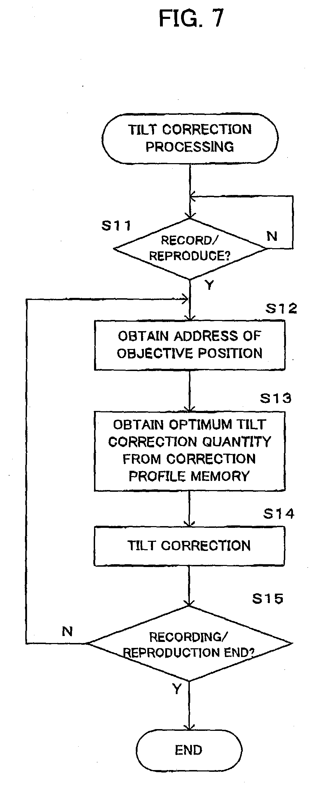

Next, a tilt correction processing carried out by utilizing the correction profile obtained by the correction profile preparation processing described above will be explained by referring to FIG. 7. FIG. 7 is a flow chart showing a procedure of tilt correction processing. The tilt correction processing is executed by the microcomputer 12 which controls the driver 13 for a tilt correction and the tilt correction unit 2a.

First of all, the microcomputer 12 determines whether an instruction of information recording to a disc or information reproduction from a disc is made by a user or not (step S11). If the instruction of recording or reproduction is made, the microcomputer 12 obtains an address which is an objective position of the recording or reproducing by utilizing an LPP and the like (step S12), and obtains the optimum tilt correction quantity corresponding to the address from the correction profile memory (step S13), Further, the microcomputer 12 controls the driver 13 for a tilt correction unit and executes the tilt correction according to the optimum tilt correction quantity thus obtained (step S14). It is noted that steps S12 to S14 are executed in recording or reproducing.

Subsequently, the microcomputer 12 determines whether an ending instruction to end the recording or reproducing is made by a user or not (step S15). Until the ending instruction is input, the steps S12 to 514 are repeated. When the ending instruction is input, the processing is ended.

[Modification]

In the above embodiment, it is explained that the correction profile is prepared and stored in advance by the correction profile preparation processing shown in FIG. 6, and that the tilt correction is carried out by utilizing the correction profile during recording or reproduction of the disc. However, even without preparing the correction profile, the amplitude level of the LPP signal may be obtained in real time basis during recording or reproducing the disc, and the tilt correction can be executed to make the amplitude level thus obtained maximum. In such a case, in recording, the amplitude level of the LPP signal is obtained in a space period of recording data, preferably in a period of a 14T space. In reproduction, the amplitude level of the LPP signal is obtained in a non-recorded area or in a space portion of a recorded area.

In the above embodiment, the amplitude level of the LPP signal is detected by the bottom-hold circuit 11. In that case, the amplitude level of the LPP signal outside the recording track Gr is detected by the quadruple photodetector PD shown in FIG. 1. Alternatively, the tilt correction quantity can also be determined by providing a peak-hold circuit instead of the bottom-hold circuit 11 and detecting the amplitude level of the LPP signal inside the recording track Gr. Moreover, the amplitude level of the LPP signal both inside and outside the recording track Gr can also be obtained by providing both a peak-hold circuit and a bottom-hold circuit.

In the above-described correction profile preparation processing, the optimum tilt correction quantity is calculated by utilizing the LPP signal in all areas on the disc. Namely, the amplitude level of the LPP signal is detected and the tilt correction quantity with which the amplitude level becomes maximum is determined as the optimum correction quantity. Alternatively, since an RF signal can be obtained in such areas as a pre-write area of a DVD-R, a readable emboss area of a DVD-RW and an area where recording has already done, the optimum tilt correction quantity can also be determined by utilizing the amplitude level of the RF signal, instead of the amplitude level of the LPP signal. As shown in FIG. 2, as to the RF signal and a disc tilt quantity, there is also a correlation that the amplitude level of the RF signal becomes maximum when the disc tilt quantity is zero. Therefore, in the above-mentioned area where the RF signal can be obtained, by detecting the amplitude level of the RF signal with varying the tilt correction quantity, the tilt correction quantity with which the amplitude of the RF signal becomes maximum can be determined as an optimum tilt correction quantity.

As described above, in this embodiment, according to the amplitude level of the LPP detection signal (i.e., LPP signal) recorded on the disc in advance, the tilt correction is executed so that the amplitude level becomes maximum. Therefore, the tilt correction can be carried out without a dedicated tilt sensor of large size.

Moreover, in the embodiment, the disc tilt quantity can be obtained with the tracking servo being executed because the LPP signal is utilized to detect the disc tilt quantity. Therefore, it is advantageous that the disc tilt quantity can be detected, not only by preparing the correction profile, but also in recording, in reproducing and even in a pause state.

Further, in the embodiment, a detection light dedicated to the detection of the disc tilt quantity, generally used in the case of utilizing a dedicated tilt sensor, is not used. When utilizing such a dedicated tilt sensor, there may be errors in the parallelism between the dedicated tilt detection light and a recording/reproducing light. In this view, in the above embodiment, the disc tilt is detected by utilizing the LPP signal which is obtained based on the return light of the light beam irradiated on the disc for the information recording and/or reproduction. Therefore, unlike the case that a dedicated tilt sensor is utilized, the detection accuracy of the disc tilt increases because the above-mentioned error due to the parallelism does not occur.

**Claims**

1. A tilt correction device (50) for a disc on which prepits are formed, comprising:

   a prepit signal generating unit (2, 3) which irradiates a light beam to the disc (1) and which generates a prepit signal indicating whether the prepit exists or not based on a return light from the disc;
   a correction quantity determining unit (4) which determines an optimum tilt correction quantity based on the prepit signal; and
   a tilt correction unit (2a) which executes tilt correction based on the optimum tilt correction quantity.

2. The tilt correction device (50) according to claim 1, wherein the correction quantity determining unit (4) determines the optimum tilt correction quantity based on an amplitude level of the prepit signal.

3. The tilt correction device (50) according to claim 2, wherein the correction quantity determining unit (4) comprises:

   an amplitude level detecting unit (11) which detects the amplitude level of the prepit signal for a plurality of tilt correction quantities; and

   a determining unit (12) which determines the tilt correction quantity with which the amplitude level becomes maximum as the optimum tilt correction quantity.

4. The tilt correction device (50) according to claim 3, wherein the amplitude level detecting unit (11) detects the amplitude levels at an identical position on the disc for the plurality of tilt quantities.

5. The tilt correction device (50) according to claim 3 or 4, wherein the amplitude level detecting unit detects the amplitude level in a non-recorded area on the disc.

6. The tilt correction device (50) according to claim 3 or 4, wherein the amplitude level detecting unit detects the amplitude level in a space portion of recording information, in reproducing a recorded area on the disc or in recording to the disc.

7. The tilt correction device (50) according to any one of claims 3 to 6, wherein the amplitude level detecting unit comprises a level-hold circuit (11) which detects a peak-level and/or a bottom-level of the prepit.

8. The tilt correction device (50) according to any one of claims 1 to 7, further comprising a storage unit (12a) which stores the optimum tilt correction quantity for each of a plurality of areas on the disc, wherein the tilt correction unit (2a) executes the tilt correction based on the optimum tilt correction quantity stored in the storage unit.

9. A tilt correction method for a disc on which prepits are formed, comprising:

   a process which irradiates a light beam to the disc;
   a process which generates a prepit signal indicating whether the prepit exists or not based on a return light from the disc;
   a process which determines an optimum tilt correction quantity based on the prepit signal; and
   a process which executes a tilt correction based on the optimum tilt correction quantity.

# FIG. 1

DISC ROTATION DIRECTION

Gr

Ld

LPP

1

C | D

B | A

Sd

Sa

PD

Sb

Sc

41

42

+

+

43

+
−

LPP SIGNAL
= (Sa+Sd) − (Sb+Sc)

RADIAL DIRECTION OF DISC

EP 1 376 550 A2

8

FIG. 2

JITTER

AMPLITUDE LEVEL
(LPP SIGNAL, RF SIGNAL)

ΔF

-0.75      -0.50      -0.25      0.00      0.25      0.50      0.75

DISC TILT QUANTITY (deg)

◆JITTER      ■RF   × LPP

EP 1 376 550 A2

FIG. 3

EP 1 376 550 A2

# FIG. 4

100

- 1
- 6
- 2
- 2a
- 3
- 50
- LPP SIGNAL GENERATING UNIT
- 11 BOTTOM-HOLD CIRCUIT
- DRIVER FOR TILT CORRECTION UNIT
- 13
- 12 μ – com
- 12a CORRECTION PROFILE MEMORY
- 30 RECORDING SYSTEM ← RECORDING DATA
- REPRODUCING SYSTEM → REPRODUCING DATA
- 32

EP 1 376 550 A2

## FIG. 5A

AMPLITUDE LEVEL
OF LPP SIGNAL

(IN NO-RECORDED AREA)

VERTICAL AXIS : 20mV/div

HORIZONTAL AXIS: 0.5$\mu$s/div

TIME

## FIG. 5B

AMPLITUDE LEVEL
OF LPP SIGNAL

(IN RECORDED AREA)

VERTICAL AXIS : 20mV/div

HORIZONTAL AXIS: 0.5$\mu$s/div

TIME

## FIG. 5C

AMPLITUDE LEVEL
OF LPP SIGNAL

(IN RECORDING)

VERTICAL AXIS : 200mV/div

HORIZONTAL AXIS: 1.0$\mu$s/div

TIME

# FIG. 6

```
        ┌──────────────────────────┐
        │  CORRECTION PROFILE      │
        │ PREPARATION PROCESSING   │
        └──────────────────────────┘
                    │
                    ▼
   S1          ◇ DISC EXIST? ◇ ──── N ──────────┐
                    │                            │
                    │ Y                          │
                    ▼                            │
        ┌──────────────────────────┐  S2        │
   ┌───►│  OBTAIN AMPLITUDE LEVEL   │            │
   │    │    OF LPP SIGNAL FROM     │            │
   │    │ PREDETERMINED POSITION    │            │
   │    └──────────────────────────┘            │
   │                │                           │
   │                ▼               S3           │
   │    ┌──────────────────────────┐            │
   │    │  DETECT OPTIMUM TILT      │            │
   │    │      CORRECTION           │            │
   │    └──────────────────────────┘            │
   │                │                           │
   │                ▼                           │
   │    ┌──────────────────────────┐            │
   │    │ STORE OPTIMUM TILT   S4   │            │
   │    │ CORRECTION QUANTITY       │            │
   │    └──────────────────────────┘            │
   │                │                           │
   │                ▼            S5              │
   │   N ◇ COMPLETE IN ALL AREAS? ◇             │
   └────                                        │
                    │ Y                         │
                    ▼                           │
                    ◄───────────────────────────┘
                    │
                    ▼
            ┌──────────────┐
            │    · END      │
            └──────────────┘
```

# FIG. 7

```
        ┌─────────────────────┐
        │   TILT CORRECTION   │
        │     PROCESSING      │
        └─────────────────────┘
                  │
                  ↓←─────────────┐
                                 │
   S11      ╱╲                   │
          ╱    ╲      N          │
        ╱ RECORD/ ╲──────────────┘
        ╲REPRODUCE?╱
          ╲    ╱
            ╲╱
             │ Y
   ┌─────────────────────────────────┐
   │→                                │
   │         S12    ↓                │
   │    ┌─────────────────────┐      │
   │    │  OBTAIN ADDRESS OF  │      │
   │    │ OBJECTIVE POSITION  │      │
   │    └─────────────────────┘      │
   │             │                   │
   │         S13 ↓                   │
   │    ┌─────────────────────┐      │
   │    │  OBTAIN OPTIMUM TILT│      │
   │    │ CORRECTION QUANTITY │      │
   │    │  FROM CORRECTION    │      │
   │    │  PROFILE MEMORY     │      │
   │    └─────────────────────┘      │
   │             │                   │
   │         S14 ↓                   │
   │    ┌─────────────────────┐      │
   │    │  TILT CORRECTION    │      │
   │    └─────────────────────┘      │
   │             │                   │
   │         S15 ↓                   │
   │      N    ╱╲                    │
   └─────────╱    ╲                  │
           ╱RECORDING/╲
           ╲REPRODUCTION END?╱
             ╲    ╱
               ╲╱
                │ Y
          ┌─────────────┐
          │    END      │
          └─────────────┘
```